# DEMANDE DE BREVET EUROPEEN

(11) **EP 2 521 063 A1**
(43) Date de publication de la demande: **07.11.2012**
(21) Numéro de dépôt: 12162006.6
(22) Date de dépôt: 29.03.2012
(51) Int. Cl.: G06F 21/00, G06F 12/14, G06K 19/073

(54) **Protection d'une mémoire volatile contre des virus par changement d'instructions**

(30) Priorité: 04.05.2011 FR 1153804
(71) Demandeur: STMicroelectronics (Rousset) SAS, 13790 Rousset (FR)
(72) Inventeur: Teglia, Yannick, 13720 BELCODENE (FR)
(74) Mandataire: de Beaumont, Michel

(57) **Abrégé**

L'invention concerne un procédé de protection d'une mémoire volatile contre un virus, dans lequel : des droits (33) d'écriture, de lecture ou d'exécution sont affectés à certaines zones (32) de la mémoire ; et une première liste (34) de codes opératoires autorisés ou interdits comme contenu des zones est associée à chacune de ces zones.

## Description

### Domaine de l'invention

La présente invention concerne de façon générale les circuits électroniques et, plus particulièrement, les circuits équipés de mémoires volatiles, qu'il s'agisse d'une mémoire vive de stockage temporaire ou d'une pile d'exécution d'une unité de traitement.

L'invention concerne plus particulièrement la protection de tels éléments de mémorisation volatile contre des attaques par virus.

### Exposé de l'art antérieur

Qu'il s'agisse d'une mémoire vive dans laquelle un programme est stocké pour son exécution ou d'une pile dynamique d'une unité de traitement dans laquelle les instructions sont placées successivement pour l'exécution de ce programme, les zones de mémoire correspondantes sont particulièrement sensibles à des attaques de type virus.

On connaît principalement deux catégories de virus.

Les virus d'une première catégorie prennent la place du programme, c'est-à-dire modifient les codes opératoires (et parfois aussi les arguments) de certaines instructions pour que le programme effectue une autre tâche que celle pour laquelle il est initialement prévu.

Les virus d'une deuxième catégorie peuvent être considérés comme externes au programme exécuté et ont pour fonction de venir modifier les données, c'est-à-dire les valeurs des arguments manipulés par le programme légitime, notamment lorsque ceux-ci sont stockés dans la pile d'exécution du programme.

On connaît des contre-mesures qui affectent des droits d'écriture, de lecture ou d'exécution sur des fichiers ou des zones mémoires. Ainsi, si un virus tente d'effectuer une action interdite sur la zone mémoire concernée, il n'est pas autorisé. Toutefois, ces mesures sont souvent considérées comme insuffisantes. En particulier, une zone où il est habituel d'exécuter un programme est accessible en écriture et en exécution. Un virus peut donc remplacer, dans cette zone, un programme ou une portion d'un programme et l'exécuter. De même, un virus peut modifier les données contenues dans la pile d'exécution.

### Résumé

Un objet d'un mode de réalisation de la présente invention est de pallier tout ou partie des inconvénients des protections de mémoire volatile contre des virus.

Selon un premier aspect, un objet d'un mode de réalisation de la présente invention est de proposer une solution plus particulièrement destinée à un virus tendant à modifier les instructions d'un programme.

Selon un deuxième aspect, un objet d'un mode de réalisation de la présente invention est de proposer une solution plus particulièrement destinée à un virus, externe à un programme exécuté, ayant pour objectif de remplacer des opérandes d'instructions.

Pour atteindre tout ou partie de ces objets ainsi que d'autres, on prévoit un procédé de protection d'une mémoire volatile contre un virus, dans lequel :
des droits d'écriture, de lecture ou d'exécution sont affectés à certaines zones de la mémoire ; et
une première liste de codes opératoires autorisés ou interdits comme contenu des zones est associée à chacune de ces zones.

Selon un mode de réalisation de la présente invention, ladite liste est stockée à la même adresse que la zone concernée.

Selon un mode de réalisation de la présente invention, ladite liste est stockée dans une table distincte de la zone concernée.

Selon un mode de réalisation de la présente invention, la mémoire volatile est une mémoire vive.

Selon un mode de réalisation de la présente invention, la mémoire volatile est une pile associée à une unité de traitement.

Selon un mode de réalisation de la présente invention, une seconde liste de codes opératoires autorisés ou interdits d'accès aux zones est associée à chacune de ces zones.

On prévoit également un circuit électronique adapté à la mise en oeuvre du procédé ci-dessus.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une représentation très schématique sous forme de blocs d'un exemple de circuit électronique du type auquel s'appliquent à titre d'exemple les modes de réalisation qui vont être décrits ;
la figure 2 illustre un exemple de pile dynamique de stockage d'instructions associée à une unité de traitement ;
la figure 3 illustre de façon simplifiée un exemple de contenu d'une mémoire volatile de type mémoire vive ; et
la figure 4 est une représentation schématique d'un mode de mise en oeuvre d'un procédé de protection d'une mémoire volatile.

### Description détaillée

De mêmes éléments ont été désignés par de mêmes références aux différentes figures. Par souci de clarté, seuls les éléments et étapes utiles à la compréhension des modes de réalisation décrits ont été représentés et seront décrits. En particulier, la destination des programmes ou données protégés n'a pas été détaillée, l'invention étant compatible avec les destinations usuelles de tels programmes à protéger contre des virus. De plus, le contenu des mémoires volatiles visées par les modes de réalisation décrits n'a été détaillé que dans la mesure où cela clarifie l'explication.

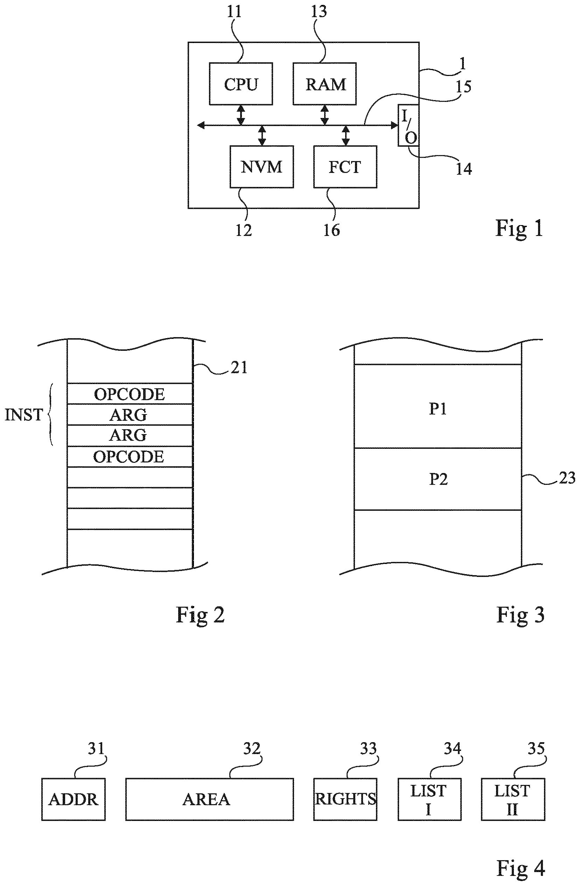

La figure 1 est une représentation très schématique d'un mode de réalisation d'un circuit électronique auquel s'applique à titre d'exemple la présente invention. Ce circuit 1 comporte une unité de traitement 11 (CPU) associée à une ou plusieurs mémoires non volatiles 12 (NVM) et à une ou plusieurs mémoires vives 13 (RAM), ainsi qu'une ou plusieurs piles d'instructions généralement contenues en mémoire RAM. Les différents éléments du circuit 1 communiquent entre eux et avec une interface d'entrée/sortie 14 (I/O), filaire ou sans contact, par l'intermédiaire de bus 15 de données, de commandes et d'adresses. Le circuit 1 peut comporter d'autres éléments symbolisés par un bloc 16 (FCT) remplissant d'autres fonctions (par exemple un cryptoprocesseur, des capteurs, d'autres éléments électroniques, etc.).

L'unité centrale de traitement 11 comporte des registres (non représentés en figure 1) dans lesquels sont transférées temporairement les instructions en cours d'exécution. Ces instructions proviennent généralement de la mémoire vive 13 dans laquelle sont transférés, en vue de leur exécution, des programmes contenus par exemple dans la mémoire non volatile 12 ou provenant de l'extérieur du circuit 1 par l'intermédiaire de l'interface 15.

La figure 2 est une représentation très schématique d'une séquence d'exécution 21 associée à l'unité de traitement 11. Chaque instruction (INST) est le plus souvent constituée d'un code opératoire ou opérateur (OPCODE) associé à des arguments (ARG). Ces arguments sont soit des adresses, soit des données traitées par le code opératoire. Le nombre d'arguments dépend de l'instruction concernée. La séquence d'exécution est accédée par l'unité de traitement.

Certaines instructions de la séquence ont pour but de manipuler la pile d'exécution du programme. Notamment on retrouve les instructions :
PUSH pour empiler une donnée (valeur ou adresse) ;
POP pour dépiler une donnée (valeur ou adresse) ;
CALL pour empiler notamment l'adresse de retour de la fonction appelante, c'est-à-dire celle qui effectue le CALL, et sauter à l'adresse de la fonction appelée ; et
RET pour dépiler une adresse de retour et y sauter.

La figure 3 est une représentation très schématique d'un plan mémoire 23 d'une mémoire vive. Ce plan mémoire contient un ou plusieurs programmes (P1 et P2 dans l'exemple de la figure 3) qui sont transférés, pour exécution, soit depuis une mémoire non volatile soit depuis l'extérieur du circuit. Ce programme est ensuite accédé par l'unité centrale. La pile d'exécution est généralement stockée dans cette mémoire.

Qu'il s'agisse des éléments de la figure 2 ou de ceux de la figure 3, on fera référence à des éléments de mémoire volatile pour les désigner. De tels éléments de mémoire volatile sont susceptibles d'être attaqués par des virus informatiques.

Dans les modes de réalisation qui vont être décrits, on prévoit d'affecter à des zones de mémoire volatile (pile d'exécution ou mémoire vive), des codes opératoires (OPCODE) autorisés. Une telle solution ajoute une granularité aux protections usuelles qui se contentent d'attribuer des droits en lecture, écriture ou exécution à ces zones mémoires.

La figure 4 illustre un mode de mise en oeuvre selon lequel, à chaque adresse 31 (ADDR) de la mémoire volatile pointant sur une zone 32 (AREA) de contenu mémoire, sont affectés non seulement un ou plusieurs droits 33 (RIGHT) parmi exécution, lecture ou écriture mais également une ou plusieurs listes 34, 35 (LIST I, LIST II) de codes opératoires autorisés.

Chaque zone de mémoire est donc "tatouée" avec la liste des instructions autorisées pour cette zone, relativement à la destination du programme, c'est-à-dire relativement à la sémantique de la fonction exécutée. Par exemple, s'il s'agit d'une zone de calcul arithmétique qui doit être exécuté linéairement, on autorisera tous les codes opératoires arithmétiques mais on interdira les opérations de saut.

La nature des codes opératoires dépend du circuit électronique et du langage utilisé par l'unité de traitement. De plus, bien que ces codes aient été exprimés de façon plus ou moins intelligible, il s'agit bien entendu en pratique de codes numériques.

Selon le premier aspect, les codes opératoires autorisés ou interdits concernent le contenu de la zone 32.

Le fait d'adjoindre, à des zones de la mémoire identifiées par leurs adresses, des codes opératoires autorisés ou interdits comme contenu des zones adressées, empêche à un virus externe au programme qui serait téléchargé dans une zone de la mémoire ou dans la pile de l'unité de traitement, de remplacer efficacement des instructions du programme. En effet, bien qu'un remplacement des instructions par ce virus reste possible, si ces instructions contiennent un code opératoire non autorisé sur la zone mémoire correspondante, l'accès est refusé et le virus devient inefficace. Pour contrer cette protection, il faudrait que le virus puisse identifier les codes opératoires autorisés dans la zone dans laquelle il souhaite écrire. Cela devient particulièrement complexe et non rentable pour un attaquant.

Dans un mode de réalisation simplifié, on peut prévoir qu'une mémoire vive ait, selon les zones, des codes opératoires figés autorisés dans les différentes adresses. Toutefois, cela restreint les possibilités d'utiliser une même zone mémoire pour différents programmes.

Ainsi, dans le mode de réalisation préféré, les codes opératoires affectés aux différentes zones mémoires sont susceptibles d'être modifiés à chaque chargement d'un programme dans la zone mémoire.

La liste des codes autorisés ou interdits est stockée, par exemple dans des mots mémoire ou dans des registres supplémentaires aux adresses des zones concernées. En variante, on prévoit une table séparée stockant, pour chaque adresse ou zone d'adresses, la liste des codes autorisés ou interdits.

On peut aussi prévoir un codage des groupes de codes opératoires pour affecter une même valeur à un ensemble d'opérations licites ou illicites pour une même zone mémoire.

Selon cet aspect, on prévoit une contre-mesure destinée à un virus qui va modifier les opérandes d'instructions d'un programme pour utiliser cette instruction à d'autres fins.

La contre-mesure exposée en relation avec le premier aspect n'est pas suffisamment efficace dans la mesure où le code opératoire associé à l'adresse à laquelle est située l'instruction est, dans ce cas, bien autorisée.

Selon le deuxième aspect, on affecte aux zones de la mémoire une liste de codes opératoires susceptibles d'accéder à cette zone. Par rapport au premier mode, il ne s'agit pas d'autoriser ou d'interdire que la zone contienne tel ou tel code opératoire dans une instruction, mais d'autoriser ou d'interdire que l'information contenue dans la zone soit accédée par tel ou tel code opératoire.

Comme pour le premier aspect, cette contre-mesure vient en complément des droits d'accès en lecture, écriture ou exécution, à la zone concernée.

Sans la première contre-mesure, un virus peut venir modifier des instructions dans des zones mémoires pour remplacer tel ou tel programme. De plus, un virus externe modifiant l'argument d'une instruction pourra commencer à être exécuté. Toutefois, si l'adresse introduite par le virus en argument de l'instruction pointe sur une zone mémoire où l'instruction (son code opératoire) n'est pas autorisée par la contre-mesure du second aspect, la valeur de la zone n'est pas affectée. Par conséquent, le virus est sans effet.

Les parties de la mémoire susceptibles d'être vulnérables à un virus externe sont ainsi considérablement restreintes.

Comme pour le premier aspect, la mise en oeuvre de la contre-mesure du second aspect requiert d'associer, à chaque adresse ou groupe d'adresses, une liste des codes opératoires autorisés ou interdits (bloc 35, LIST II, figure 4). La différence est qu'il s'agit des codes ayant le droit ou non d'accéder à la zone 32 alors que la liste LIST I liste les codes autorisés ou interdits dans la zone 32.

Toujours comme pour le premier aspect, la définition des codes opératoires autorisés ou interdits peut, dans un mode de réalisation simplifié, être figée, ou dans une réalisation plus évoluée, être mise à jour à chaque chargement du programme en mémoire.

Un avantage des modes de réalisation décrits est qu'ils ajoutent une protection aux solutions existantes. Les deux aspects décrits ci-dessus sont bien entendus combinables.

Divers modes de réalisation ont été décrits. Diverses variantes et modifications apparaîtront à l'homme de l'art. En particulier, la mise en oeuvre pratique des modes de réalisation décrits est à la portée de l'homme du métier à partir des indications fonctionnelles données ci-dessus. Le prix à payer pour la mise en oeuvre de ces modes de réalisation est une table ou une zone supplémentaire de la mémoire contenant les codes opératoires autorisés ou interdits pour chacune des zones.

Par ailleurs, la suite à donner à une violation de règle (tentative d'accès à une zone non autorisée ou d'écriture d'un code non autorisé dans une zone) peut varier selon les applications. On peut prévoir de bloquer le circuit, d'avertir l'utilisateur, de simplement rejeter l'instruction, etc.

La granularité souhaitée pour les zones de la mémoire à protéger dépend de l'application. Cette granularité pourra être mot par mot, groupe de mots par groupe de mots, etc. Plus la granularité est fine, meilleure est la protection mais plus on consomme de mémoire supplémentaire.

## Revendications

1. Procédé de protection d'une mémoire volatile (21, 23) contre un virus, dans lequel :
des droits (33) d'écriture, de lecture ou d'exécution sont affectés à certaines zones (32) de la mémoire ; et
une première liste (34) de codes opératoires autorisés ou interdits comme contenu des zones est associée à chacune de ces zones.

2. Procédé selon la revendication 1, dans lequel ladite liste est stockée à la même adresse que la zone concernée.

3. Procédé selon la revendication 1, dans lequel ladite liste est stockée dans une table distincte de la zone concernée.

4. Procédé selon l'une quelconque des revendications 1 à 3, dans lequel la mémoire volatile est une mémoire vive (23).

5. Procédé selon l'une quelconque des revendications 1 à 3, dans lequel la mémoire volatile est une pile (21) associée à une unité de traitement (11).

6. Procédé selon l'une quelconque des revendications 1 à 5, dans lequel une seconde liste (35) de codes opératoires autorisés ou interdits d'accès aux zones est associée à chacune de ces zones.

7. Circuit électronique adapté à la mise en oeuvre du procédé selon l'une quelconque des revendications 1 à 6.
